# EUROPÄISCHE PATENTSCHRIFT

(11) **EP 2 490 416 B1**
(45) Veröffentlichungstag und Bekanntmachung des Hinweises auf die Patenterteilung: **30.08.2017**
(21) Anmeldenummer: 11155055.4
(22) Anmeldetag: 18.02.2011
(51) Int. Cl.: H04M 1/60, H04M 1/725

(54) **Drahtloses Telefonsystem für Mehrraumumgebungen**
Wireless telephone system for multi-room environments
Système de téléphone sans fil pour environnements multi-spatiaux

(43) Veröffentlichungstag der Anmeldung: 22.08.2012
(73) Patentinhaber: Gigaset Communications GmbH, 40549 Düsseldorf (DE)
(72) Erfinder: Ord, Nicholas, 85521, Ottobrunn (DE)
(74) Vertreter: Michalski Hüttermann & Partner Patentanwälte mbB

(56) Entgegenhaltungen:
- EP-A2- 0 736 992
- WO-A1-2009/080704
- WO-A1-2009/153684
- US-A1- 2003 210 770

## Beschreibung

Die vorliegende Erfindung betrifft ein drahtloses Telefonsystem für Mehrraumumgebungen. Insbesondere betrifft die vorliegende Erfindung ein Telefonsystem, bei welchem ein Benutzer ein drahtlos an eine als Steuereinrichtung dienende Basisstation angebundenes Mikrofon mit sich führt und stationär angeordnete Lautsprecher das Sprachsignal eines Gesprächspartners wiedergeben.

Drahtlose Telefonsysteme sind seit vielen Jahren im Bereich der Heim- und Bürokommunikationssysteme bekannt. Hierbei werden mobile Telekommunikationsendgeräte über eine Funkverbindung mit einer Basisstation verbunden, welche an ein Telekommunikationsnetz angeschlossen ist. Die dabei eingesetzten Telekommunikationsendgeräte (Mobilteil) umfassen zumindest ein Mikrofon, einen Lautsprecher und eine Sende-Empfangseinrichtung zur Anbindung an ein Funknetz.

In vielen mobilen Endgeräten ist eine Freisprechfunktion vorgesehen, um das Führen eines Telefongespräches zu ermöglichen, ohne das Mobilteil in den Händen halten zu müssen. Hierbei besteht jedoch zum einen das Problem, dass der Betrieb des Mobilteils in Freisprech-Betriebsmodus aufgrund der mit der Lautsprecherwiedergabe des Sprachsignals einer Gegenstelle einhergehenden Verstärkerleistung energieintensiv ist und die Betriebsdauer des Mobilteils durch die begrenzte Kapazität der zur Energieversorgung des Mobilteils genutzten Batterien und/oder Akkumulatoren deutlich beschränkt ist. Zum anderen muss das Mobilteil bei Verlassen der akustischen Umgebung um das Mobilteil herum, beispielsweise beim Drehen des Körpers vom Mobilteil weg, beim Verlassen der direkten Umgebung des momentanen GD 46632 / SAM:UAM

Standorts des Mobilteils, oder sogar beim Verlassen eines Raumes, mitgeführt werden, um das Gespräch mit der Gegenstelle weiterführen zu können. Hierzu muss das Mobilteil jedoch wieder in die Hand genommen werden, was eine deutliche Einschränkung des Komforts darstellt.

Das Dokument EP0736992 A2 beschreibt ein Telefonsystem zur schnurlosen Übertragung eines akustischen Signals mit einem Basisteil, einem Mobilteil sowie einer Wiedergabeeinrichtung.

Das Dokument US 2003/0210770 A1 beschreibt eine Vorrichtung, welche zur Übertragung von Sprachnachrichten über ein bestehendes Netzwerk genutzt wird.

Das Dokument WO 2009/153684 A1 betrifft ein telefonisches Notrufsystem. welches dazu dient einer Person im Notfall die Kommunikation zu einer anderen Person zu ermöglichen.

Das Dokument WO 2009/080704 A1 beschreibt ein Verfahren und Telefon zum schnurlosen Telefonieren mit einer Basisstation mit einer integrierten Wiedergabeeinrichtung sowie mehreren Mobilteilen.

Das hierzu im Stand der Technik als Alternative vorgesehene Nutzen eines Kopfhörersystems wir von vielen Nutzern als unangenehm empfunden, so dass Bedarf an einer weiteren Alternative zur verbesserten mobilen Kommunikation besteht.

Dies berücksichtigend ist es die Aufgabe der vorliegenden Erfindung ein Telefonsystem sowie ein Verfahren zum Betrieb eines solchen anzugeben, welches das Führen von Telefongesprächen im Freisprechmodus erlaubt und die genannten Problematiken zu überwinden vermag.

Gelöst wird diese Aufgabe durch ein Telefonsystem gemäß Anspruch 1 sowie ein Verfahren zum Betrieb eines Telefonsystems gemäß Anspruch 8. Ausgestaltungen des erfindungsgemäßen Telefonsystems und Verfahrens finden sich in den abhängigen Ansprüchen und der nachfolgen Beschreibung.

Es wird somit ein Telefonsystem vorgeschlagen, aufweisend eine Basisstation, wenigstens ein drahtlos an die Basisstation signaltechnisch angebundenes Mobilteil, sowie wenigstens eine ortsfest angeordnete und mit der Basisstation signaltechnisch verbundene Wiedergabeeinrichtung, welches dadurch gekennzeichnet ist, dass das Telefonsystem eine signaltechnisch mit der Basisstation verbundene Sensoreinrichtung zur Ermittlung des akustischen Abstandes des Mobilteils zu der ortsfesten Wiedergabeeinrichtung aufweist und die Basisstation eine Einrichtung zur Weiterleitung eines in das Telefonsystem eingehenden Sprachsignal an die Wiedergabeeinrichtung aufweist, mittels welcher ein eingehendes Sprachsignal automatisch an eine Wiedergabeeinrichtung weiterleitbar ist, wenn sich das Mobilteil in akustischer Nähe zu der Wiedergabeeinrichtung befindet.

Durch das erfindungsgemäße Telefonsystem braucht das eingehende Sprachsignal nicht mehr notwendigerweise an das Mobilteil weitergeleitet zu werden, sondern wird über ortsfeste Wiedergabeeinrichtungen so wiedergegeben, dass es von einem Nutzer wahrgenommen werden kann. Das ortsfeste Wiedergabesystem kann dabei vorteilhafter Weise an eine permanente Energieversorgung, wie beispielsweise eine Netzsteckdose, angeschlossen sein. Da durch das erfindungsgemäße Telefonsystem die Notwendigkeit der Wiedergabe des eingehenden Sprachsignals über das Mobilteil entfällt, entfällt hierdurch auch der mit dieser Wiedergabe einhergehende Energiebedarf des Mobilteils, wodurch sich die nutzbare Betriebsdauer des Mobilteils auch im Freisprechbetrieb deutlich verlängert.

In einer bevorzugten Ausgestaltung der Erfindung ist das Mobilteil als reines Mikrofon-System ausgelegt, wodurch dieses sehr platzsparend ausgeführt werden kann, da die Notwendigkeit eines Lautsprechers zur Wiedergabe entfällt. Durch den Verzicht eines Lautsprechers kann demgemäß auch auf eine entsprechende Verstärkungseinrichtung im Mobilteil verzichtet werden, wodurch eine weitere Ersparnis der Baugröße erfolgt. Gleichzeitig führt der Verzicht auf eine Verstärkungseinrichtung zu einem deutlich geringeren Energiebedarf des Mobilteils, wodurch bei gleicher Kapazität der Energieversorgung eine deutlich erhöhte Betriebsdauer des Mobilteils erreicht werden kann.

Alternativ kann das Mobilteil auch mit einem ggf. kleinen, einfachen Lautsprecher ausgestattet sein, der nur in bestimmten Situationen zum Einsatz kommt, beispielsweise falls der akustische Abstand vom Mobilteil zur nächsten Wiedergabeeinrichtung so groß ist, dass keine zufriedenstellende Verständlichkeit des von der nächsten Wiedergabeeinrichtung wiedergegebenen Gesprächs am Ort des Mobilteils gegeben ist

In einer besonders bevorzugten Ausführung der Erfindung ist das Mobilteil als eine Art Clip ausgeführt, welcher an der Kleidung eines Nutzers an geeigneter Stelle, wie beispielweise einem Revers oder Kragen, befestigt werden kann.

In einer weiteren Ausgestaltung des erfindungsgemäßen Telefonsystems weist dieses wenigstens zwei ortsfest angeordnete Wiedergabeeinrichtungen sowie wenigstens zwei Sensoreinrichtungen auf und die Einrichtung der Basisstation ist derart eingerichtet, dass ein eingehendes Sprachsignal in Abhängigkeit der über die Sensoreinrichtungen erhaltenen Informationen über den akustischen Abstand des Mobilteils zu den Wiedergabeeinrichtungen automatisch an die Wiedergabeeinrichtung weiterleitbar ist, welche den geringsten akustischen Abstand zum Mobilteil aufweist. Hierdurch ist es möglich, Wiedergabeeinrichtungen verteilt über einen Raum oder ein Gebäude vorzusehen und sich innerhalb des Raum oder Gebäudes auch während des Führens eines Telefongespräches im Freisprechmodus frei zu bewegen, ohne einen Verlust der Wahrnehmbarkeit des eines Sprachsignals befürchten zu müssen.

In einer weiten Ausgestaltung der Erfindung weist das Telefonsystem ein weiteres Mobilteil auf und die Basisstation derart eingerichtet ist, dass ein von dem weiteren Mobilteil ausgehendes Sprachsignal automatisch mittels der Einrichtung der Basisstation an die Wiedergabeeinrichtung weiterleitbar ist, welche den geringsten akustischen Abstand zu dem ersten Mobilteil aufweist, und wobei ein von dem ersten Mobilteil ausgehendes Sprachsignal automatisch an die Wiedergabeeinrichtung weiterleitbar ist, welche den geringsten akustischen Abstand zu dem zweiten Mobilteil aufweist. Hierdurch ist es beispielsweise möglich, zwei an eine gemeinsame Basisstation angemeldete Mobilteile in eine interne oder auch externe Konferenzschaltung einzubinden. So kann es beispielsweise vorgesehen sein, dass ein Nutzer, der sich mit einem Mobilteil in einem ersten Raum mit einer ersten ortsfesten Wiedergabeeinrichtung befindet und ein Nutzer der sich mit einem weiteren Mobilteil in einem Raum mit einer zweiten ortsfesten Wiedergabeeinrichtung befindet, gemeinsam mit einer dritten Person, welche beispielsweise von Außen in das Telefonsystem hinein anruft, telefonieren können und jeweils auch hören können, was der Nutzer in dem jeweilig anderem Raum sagt.

In einer weiteren Ausgestaltung der Erfindung ist die Einrichtung in der Basisstation zur Weiterleitung an die Wiedergabeeinrichtungen für den Fall, dass sich die Mobilteile in einer gemeinsamen akustischen Umgebung befinden derart eingerichtet, dass eine Weiterleitung des Sprachsignale der Mobilteile an eine in der gemeinsamen akustischen Umgebung der Mobilteile befindlichen Wiedergabeeinrichtung unterdrückbar ist. Hierdurch wird vermieden, dass es zu Rückkopplungseffekten zwischen den Mobilteilen und der Wiedergabeeinrichtung kommt. Gleichzeitig ist aber auch eine Wahrnehmbarkeit des jeweils anderen Nutzers sichergestellt, da sich beide Nutzer ja in einer gemeinsamen akustischen Umgebung, wie beispielsweise in demselben Raum, befinden und sich gegenseitig jeweils direkt hören können.

Die ortsfesten Wiedergabeeinrichtungen können erfindungsgemäß drahtgebunden oder drahtlos an die Basisstation angebunden sein, wobei eine drahtlose Anbindung über das Funknetz, über welches auch die Mobilteile des Telefonsystems an die Basisstation angebunden sind bevorzugt ist. In einer weiteren Ausgestaltung der Erfindung sind die ortsfesten Wiedergabeeinrichtungen und die Basisstation signaltechnisch über das Stromleitungsnetz miteinander verbunden, so dass es zur signaltechnischen Verbindung der genannten Komponenten beispielsweise genügt, diese an das gemeinsame Stromversorgungsnetz eines Gebäudes anzuschließen. Dabei kann es insbesondere vorgesehen sein, das die Wiedergabeeinrichtungen und die Basisstation signaltechnisch mittels eines Ethernets miteinander verbunden sind. Hierbei können beispielsweise unter den Namen dLan, Power LAN, oder Powerline Communications bekannte Technologien zum Einsatz gelangen.

In einer weiteren bevorzugten Ausgestaltung der Erfindung sind die Sensoreinrichtungen Bestandteil der Wiedergabeeinrichtungen. Hierdurch können die Sensoreinrichtungen und Wiedergabeeinrichtungen in ein gemeinsames Gehäuse integriert werden, wodurch sich der Installationsaufwand für das erfindungsgemäße Telefonsystem reduziert.

Hinsichtlich des Verfahrens wird die Aufgabe der Erfindung somit durch ein Verfahren zum Betrieb eines Telefonsystems gelöst, wobei das Telefonsystem eine Basisstation, wenigstens ein drahtlos an die Basisstation signaltechnisch angebundenes Mobilteil, wenigstens eine ortsfest angeordnete und mit der Basisstation signaltechnisch verbundene Wiedergabeeinrichtung, sowie eine signaltechnisch mit der Basisstation verbundene Sensoreinrichtung zur Ermittlung des akustischen Abstandes des Mobilteils zu der ortsfesten Wiedergabeeinrichtung aufweist, welches dadurch gekennzeichnet ist, dass ein in das Telefonsystem eingehendes Sprachsignal automatisch über die Wiedergabeeinrichtung wiedergegeben wird, wenn durch die Sensoreinrichtung erkannt wird, dass sich das Mobilteils in akustischen Nähe zur Wiedergabeeinrichtung befindet.

In einer bevorzugten Ausgestaltung des Verfahrens sind in dem Telefonsystem wenigstens zwei ortsfeste Wiedergabesysteme vorgesehen, welche sich nicht in akustischer Nähe zueinander befinden und ein in das Telefonsystem eingehendes Sprachsignal automatisch an jeweils das Wiedergabesystem weitergeleitet wird, welches sich in geringerem akustischen Abstand zum Mobilteil befindet.

Gemäß einer weiteren Ausgestaltung des erfindungsgemäßen Verfahrens ist in dem Telefonsystem ein weiteres Mobilteil vorgesehen und ein von dem weiteren Mobilteil ausgehendes Sprachsignal wird automatisch an die Wiedergabeeinrichtung weitergeleitet, welche den geringsten akustischen Abstand zu dem ersten Mobilteil aufweist und ein von dem ersten Mobilteil ausgehendes Sprachsignal wird automatisch an die Wiedergabeeinrichtung weitergeleitet, welche den geringsten akustischen Abstand zum weiteren Mobilteil aufweist.

In einer weiteren Ausgestaltung des erfindungsgemäßen Verfahrens wird in den Fall, dass sich die Mobilteile in einer gemeinsamen akustischen Umgebung befinden, eine Weiterleitung des Sprachsignale der Mobilteile an eine in der gemeinsamen akustischen Umgebung der Mobilteile befindlichen Wiedergabeeinrichtung unterdrückt.

Zur Bestimmung des akustischen Abstandes zwischen einem Mobilteil und einer Wiedergabeeinrichtung wird gemäß einer bevorzugten Ausgestaltung der Erfindung von dem Mobilteil ein Referenzsignal ausgesendet, welches von den Sensoreinrichtungen wahrnehmbar ist. Anhand der an den Sensoreinrichtungen empfangenen Signalintensität kann der ermittelt werden, welche Wiedergabeeinrichtung den geringsten akustischen Abstand zu einem Mobilteil aufweist. Dabei kann es vorgesehen sein, dass das von dem Mobilteilen ausgesendete Referenzsignal Information über das Mobilteil enthält, mittels welcher das Mobilteil für die Basisstation und/oder die Sensoreinrichtungen identifizierbar ist.

Unter dem akustischen Abstand ist dabei im Sinne der Erfindung der Abstand zu verstehen, den ein Schallsignal zwischen dem Mobilteil und der Wiedergabeeinrichtung zurücklegen muss. So kann beispielsweise der geometrische Abstand zwischen einem Mobilteil und einer Wiedergabeeinrichtung deutlich geringer sein, als der akustische Abstand, wenn beispielsweise eine Wand oder eine anderweitige akustische Barriere zwischen dem Mobilteil und der Wiedergabeeinrichtung liegen.

Die Erfindung wird nachfolgend anhand von Figuren weiter erläutert. Dabei zeigt:
- Fig. 1: eine erste Ausgestaltung der Erfindung mit einem Mobilteil und einer ortsfesten Wiedergabeeinrichtung;
- Fig. 2: eine Ausgestaltung der Erfindung mit zwei in unterschiedlichen Räumen angeordneten ortsfesten Wiedergabeeinrichtungen;
- Fig. 3: eine Ausgestaltung der Erfindung mit zwei Mobilteilen, welche sich jeweils in unterschiedlichen Räumen befinden; und
- Fig. 4: eine Ausgestaltung der Erfindung, bei welcher sich zwei Mobilteile in einer gemeinsamen akustischen Umgebung befinden.

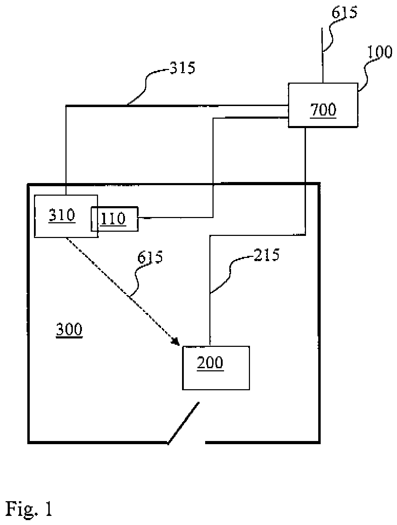

In Fig. 1 ist erste Ausgestaltung der Erfindung mit einem Mobilteil 200 und einer ortsfesten Wiedergabeeinrichtung 310 gezeigt, welche sich in einem Raum 300 befinden. Die ortsfeste Wiedergabeeinrichtung 310 ist signaltechnisch über Verbindung 315 mit einer Basisstation 100 verbunden, an welche das Mobilteil 200 über ein geeignetes Funknetzwerk 215, wie beispielsweise eine Funkverbindung auf Basis des DECT-Standards, angebunden ist. Hierbei kann die Verbindung 315 sowohl eine Funkverbindung, vorzugsweise ebenfalls auf Basis des DECT-Standards oder eine kabelgebundene Verbindung, wie beispielweise eine Ethernet-Verbindung, sein. Das Mobilteil 200 sendet ein Referenzsignal aus, welches durch die ebenfalls wie die ortsfeste Wiedergabeeinrichtung 310 signaltechnisch an die Basisstation angebundene Sensoreinrichtung 110 wahrgenommen werden kann. Vorzugsweise sind die Wiedergabeeinrichtung 310 und die Sensoreinrichtung 110 in einer gemeinsamen Systemkomponente integriert. In der Basisstation 100 ist eine Einrichtung 700 vorgesehen, welche das Sprachsignal 615 eines in das Telefonsystem eingehenden Anrufs einer externen Gegenstelle an die Wiedergabeeinrichtung 310 weiterleitet, wenn über die Sensoreinrichtung 110 festgestellt wurde, dass sich das Mobilteil 200 in akustischer Nähe zu der Wiedergabeeinrichtung 310 befindet. Als Grundlage für die Bestimmung der akustischen Nähe dient dabei das von dem Mobilteil ausgesendete Referenzsignal. Vorzugsweise umfasst das Referenzsignal auch Informationen, welche eine eindeutige Identifizierung des jeweils aussenden Mobilteils erlauben. Dies kann beispielsweise durch Übermittlung eines Identifizierungscodes erfolgen, oder auch durch Anwendung geeigneter Zeit- und/oder Frequenzmultiplex-Verfahren.

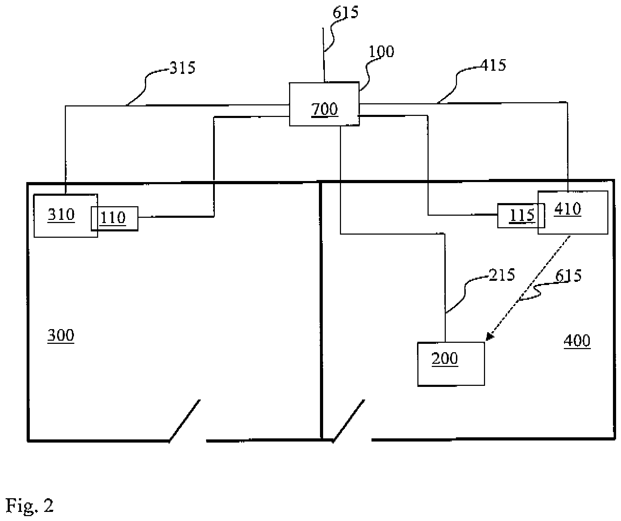

Fig. 2 zeigt eine Ausgestaltung der Erfindung mit zwei in unterschiedlichen Räumen 300 und 400 angeordneten ortsfesten Wiedergabeeinrichtungen 310 und 410. In zu der in Raum 300 vorgesehenen ortsfesten Wiedergabeeinrichtung 310 und Sensoreinrichtung 110 identischer Weise ist in Raum 400 eine Wiedergabeeinrichtung 410 und eine Sensoreinrichtung 115 vorgesehen, welche ebenfalls an die Basisstation über die Verbindung 415 angebunden sind. Stellt die Sensoreinrichtung 115 nun aufgrund des von dem Mobilteil 200 ausgesendeten Referenzsignals fest, dass sich das Mobilteil 200 im Raum 400 befindet, also in akustischer Nähe zu der Wiedergabeeinrichtung 410, so wird über die Einrichtung 700 der Basisstation 100 das Sprachsignal 615 eines eingehenden Anrufs an die Wiedergabeeinrichtung 410 weitergeleitet und über diese wiedergegeben, während eine Weiterleitung des Sprachsignals 615 an die Wiedergabeeinrichtung 310 in Raum 300 unterdrückt wird.

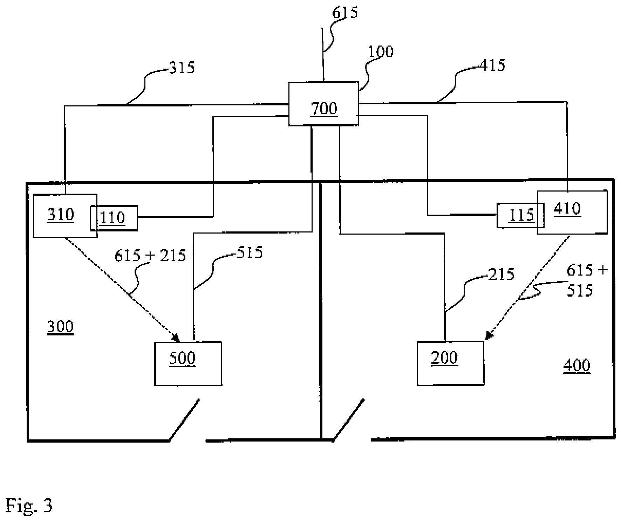

Fig. 3 zeigt eine Ausgestaltung der Erfindung mit zwei Mobilteilen 200 und 500, welche sich jeweils in unterschiedlichen Räumen 300 und 400 befinden. Die grundlegende Funktionalität ist dabei identisch zu der in den Figuren 1 und 2 erläuterten. Die Einrichtung 700 zur Weiterleitung der in die Basisstation eingehenden Sprachsignale leitet jetzt jedoch neben dem Sprachsignal 615 des externen Anrufers auch das von dem Mobilteil 200 ausgehende Signal 215 an die Wiedergabeeinrichtung 310 in Raum 300 weiter, in welchem sich das Mobilteil 500 befindet, während das Signal 515 des Mobilteils 500 an die Wiedergabeeinrichtung 410 in Raum 400 weitergeleitet wird, in welchem sich das Mobilteil 200 befindet. Hierdurch können sich alle Teilnehmer des so skizzierten Konferenzschaltungsszenarios hören.

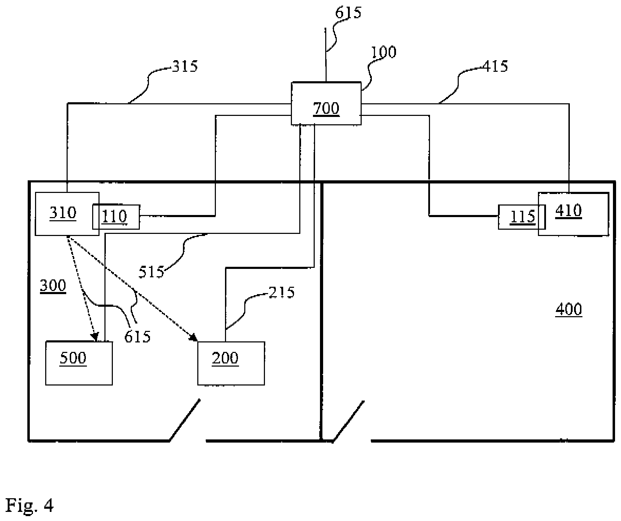

Fig. 4 zeigt eine Ausgestaltung der Erfindung, bei welcher sich die zwei Mobilteile 200 und 500 in einer gemeinsamen akustischen Umgebung 300 befinden. Nimmt die Sensoreinrichtung 110 die Referenzsignale sowohl des Mobilteils 200, als auch des Mobilteils 500 wahr, wird eine Weiterleitung des von den jeweiligen Mobilteilen 200/500 ausgehenden Signale 215/515 an die ortsfeste Wiedergabeeinrichtung 310 im Raum 300 unterdrückt und lediglich das Sprachsignal 615 des externen Anrufers wird über die Wiedergabeeinrichtung 310 wiedergegeben. Hierdurch werden etwaige akustische Rückkopplungen zwischen den Mobilteilen 200/500 und der Wiedergabeeinrichtung 310 vermieden.

## Patentansprüche

1. Telefonsystem, aufweisend eine Basisstation (100), wenigstens ein drahtlos an die Basisstation (100) signaltechnisch angebundenes Mobilteil (200), sowie wenigstens eine ortsfest angeordnete und mit der Basisstation (100) signaltechnisch verbundene Wiedergabeeinrichtung (310), wobei die Basisstation (100) eine Einrichtung (700) zur Weiterleitung eines in das Telefonsystem eingehenden Sprachsignals (615) an die Wiedergabeeinrichtung (310) aufweist, **dadurch gekennzeichnet, dass** das Telefonsystem eine signaltechnisch mit der Basisstation (100) verbundene Sensoreinrichtung (110) zur Ermittlung des akustischen Abstandes des Mobilteils (200) zu der ortsfesten Wiedergabeeinrichtung (310) aufweist und ein eingehendes Sprachsignal (615) mittels der Einrichtung (700) zur Weiterleitung automatisch an eine Wiedergabeeinrichtung (310) weiterleitbar ist, wenn sich das Mobilteil (200) in akustischer Nähe zu der Wiedergabeeinrichtung (310) befindet.

2. Telefonsystem gemäß Anspruch 1, wobei dieses wenigstens zwei ortsfest angeordnete Wiedergabeeinrichtungen (310, 410) sowie wenigstens zwei Sensoreinrichtungen (110, 115) aufweist und die Einrichtung (700) der Basisstation (100) derart eingerichtet ist, dass ein eingehendes Sprachsignal (615) in Abhängigkeit der über die Sensoreinrichtungen (110, 115) erhaltenen Informationen über den akustischen Abstand des Mobilteils (200) zu den Wiedergabeeinrichtungen (310, 410) automatisch an die Wiedergabeeinrichtung (310, 410) weiterleitbar ist, welche den geringsten akustischen Abstand zum Mobilteil (200) aufweist.

3. Telefonsystem gemäß einem der vorhergehenden Ansprüche, wobei dieses ein weiteres Mobilteil (500) aufweist und die Basisstation (100) derart eingerichtet ist, dass ein von dem weiteren Mobilteil (500) ausgehendes Sprachsignal (515) automatisch mittels der Einrichtung (700) an die Wiedergabeeinrichtung (410) weiterleitbar ist, welche den geringsten akustischen Abstand zum Mobilteil (200) aufweist, und ein von dem Mobilteil (200) ausgehendes Sprachsignal (215) automatisch an die Wiedergabeeinrichtung (310) weiterleitbar ist, welche den geringsten akustischen Abstand zum Mobilteil (500) aufweist.

4. Telefonsystem gemäß Anspruch 3, wobei für den Fall, dass sich die Mobilteile (200, 500) in einer gemeinsamen akustischen Umgebung befinden die Basisstation derart eingerichtet ist, dass eine Weiterleitung des Sprachsignale (210, 515) der Mobilteile an eine in der gemeinsamen akustischen Umgebung der Mobilteile (200, 500) befindlichen Wiedergabeeinrichtung (310) mittels der Einrichtung (700) unterdrückbar ist.

5. Telefonsystem gemäß einem der vorhergehenden Ansprüche, wobei die ortsfesten Wiedergabeeinrichtungen (310, 410) drahtlos an die Basisstation angebunden sind.

6. Telefonsystem gemäß einem der vorhergehenden Ansprüche, wobei die ortsfesten Wiedergabeeinrichtungen (310, 410) an die Basisstation signaltechnisch über ein gemeinsames Stromversorgungsnetz angebunden sind.

7. Telefonsystem gemäß einem der vorhergehenden Ansprüche, wobei die Sensoreinrichtungen (110, 115) Bestandteil der Wiedergabeeinrichtungen (310, 410) sind.

8. Verfahren zum Betrieb eines Telefonsystems, wobei das Telefonsystem eine Basisstation (100), wenigstens ein drahtlos an die Basisstation (100) signaltechnisch angebundenes Mobilteil (200), wenigstens eine ortsfest angeordnete und mit der Basisstation (100) signaltechnisch verbundene Wiedergabeeinrichtung (310) aufweist, **dadurch gekennzeichnet, dass** das Telefonsystem eine signaltechnisch mit der Basisstation (100) verbundene Sensoreinrichtung (110) zur Ermittlung des akustischen Abstandes des Mobilteils (200) zu der ortsfesten Wiedergabeeinrichtung (310) aufweist und ein in das Telefonsystem eingehendes Sprachsignal (615) automatisch über die Wiedergabeeinrichtung (310) wiedergegeben wird, wenn durch die Sensoreinrichtung (110) erkannt wird, dass sich das Mobilteils (200) in akustischen Nähe zur Wiedergabeeinrichtung befindet.

9. Verfahren gemäß Anspruch 8, wobei in dem Telefonsystem wenigstens zwei ortsfeste Wiedergabesysteme (310, 410) vorgesehen sind, welche sich nicht in akustischer Nähe zueinander befinden und ein in das Telefonsystem eingehendes Sprachsignal (615) automatisch an jeweils das Wiedergabesystem (310, 410) weitergeleitet wird, welches sich in geringerem akustischen Abstand zum Mobilteil (200) befindet.

10. Verfahren gemäß Anspruch 9, wobei in dem Telefonsystem ein weiteres Mobilteil (500) vorgesehen ist und ein von dem weiteren Mobilteil (500) ausgehendes Sprachsignal (515) automatisch an die Wiedergabeeinrichtung (410) weitergeleitet wird, welche den geringsten akustischen Abstand zu dem Mobilteil (200) aufweist und ein von dem Mobilteil (200) ausgehendes Sprachsignal (215) automatisch an die Wiedergabeeinrichtung (310) weitergeleitet wird, welche den geringsten akustischen Abstand zu dem Mobilteil (500) aufweist.

11. Verfahren gemäß Anspruch 10, wobei in den Fall, dass sich die Mobilteile (200, 500) in einer gemeinsamen akustischen Umgebung befinden, eine Weiterleitung des Sprachsignale (210, 515) der Mobilteile an eine in der gemeinsamen akustischen Umgebung der Mobilteile (200, 500) befindlichen Wiedergabeeinrichtung (310) unterdrückt wird.

12. Verfahren gemäß einem der Anspruch 8 bis 11, wobei zur Bestimmung des akustischen Abstandes zwischen einem Mobilteil (200, 500) und einer Wiedergabeeinrichtung (310, 410) von dem Mobilteil (200, 500) ein Referenzsignal ausgesendet wird, welches von den Sensoreinrichtungen (110, 115) wahrnehmbar ist.

## Claims

1. A telephone system, comprising a base station (100), at least one mobile part (200) connected wirelessly to the base station (100) for signal exchange, and at least one reproduction device (310) arranged in a stationary manner and connected to the base station (100) for signal exchange, wherein the base station (100) comprises a device (700) for forwarding a speech signal (615) entering the telephone system to the reproduction device (310), **characterised in that** the telephone system comprises a sensor device (110) connected to the base station (100) for signal exchange for determining the acoustic distance of the mobile part (200) from the stationary reproduction device (310) and an incoming speech signal (615) can be automatically forwarded to a reproduction device (310) by means of the forwarding device (700) if the mobile part (200) is in the acoustic vicinity of the reproduction device (310).

2. The telephone system according to claim 1, wherein this comprises at least two reproduction devices (310, 410) arranged in a stationary manner and at least two sensor devices (110, 115) and the device (700) of the base station (100) is configured in such a way that an incoming speech signal (615) can be forwarded automatically to the reproduction device (310, 410) that is arranged at the shortest acoustic distance from the mobile part (200) depending on the information obtained via the sensor devices (110, 115) regarding the acoustic distance of the mobile part (200) from the reproduction devices (310, 410).

3. The telephone system according to any one of the preceding claims, wherein this comprises a further mobile part (500) and the base station (100) is configured in such a way that a speech signal (515) exiting the further mobile part (500) can be forwarded automatically by means of the device (700) to the reproduction device (410) that is arranged at the shortest acoustic distance from the mobile part (200), and a speech signal (215) exiting the mobile part (200) can be forwarded automatically to the reproduction device (310) that is arranged at the shortest acoustic distance from the mobile part (500).

4. The telephone system according to claim 3, wherein, should the mobile parts (200, 500) be located in a common acoustic environment, the base station is configured in such a way that a forwarding of the speech signals (210, 515) of the mobile parts by means of the device (700) to a reproduction device (310) located in the common acoustic environment of the mobile parts (200, 500) can be suppressed.

5. The telephone system according to any one of the preceding claims, wherein the stationary reproduction devices (310, 410) are connected wirelessly to the base station.

6. The telephone system according to any one of the preceding claims, wherein the stationary reproduction devices (310, 410) are connected to the base station for signal exchange by means of a common power network.

7. The telephone system according to any one of the preceding claims, wherein the sensor devices (110, 115) are part of the reproduction devices (310, 410).

8. A method for operating a telephone system, wherein the telephone system comprises a base station (100), at least one mobile part (200) connected wirelessly to the base station (100) for signal exchange, and at least one reproduction device (310) arranged in a stationary manner and connected to the base station (100) for signal exchange, **characterised in that** the telephone system comprises a sensor device (110) connected to the base station (100) for signal exchange for determining the acoustic distance of the mobile part (200) from the stationary reproduction device (310) and a speech signal (615) entering the telephone system is automatically reproduced via the reproduction device (310) if the sensor device (110) recognises that the mobile part (200) is in the acoustic vicinity of the reproduction device.

9. The method according to claim 8, wherein at least two stationary reproduction systems (310, 410) are provided in the telephone system, which reproduction systems are not located in the acoustic vicinity of one another and a speech signal (615) entering the telephone system is forwarded automatically to the reproduction system (310, 410) that is arranged at a shorter acoustic distance from the mobile part (200).

10. The method according to claim 9, wherein a further mobile part (500) is provided in the telephone system and a speech signal (515) exiting the further mobile part (500) is automatically forwarded to the reproduction device (410) that is arranged at the shortest acoustic distance from the mobile part (200), and a speech signal (215) exiting the mobile part (200) is forwarded automatically to the reproduction device (310) that is arranged at the shortest acoustic distance from the mobile part (500).

11. The method according to claim 10, wherein, should the mobile parts (200, 500) be located in a common acoustic environment, a forwarding of the speech signals (210, 515) of the mobile parts to a reproduction device (310) located in the common acoustic environment of the mobile parts (200, 500) is suppressed.

12. The method according to any one of claims 8 to 11, wherein, in order to determine the acoustic distance between a mobile part (200, 500) and a reproduction device (310, 410), a reference signal is sent by the mobile part (200, 500) and can be sensed by the sensor devices (110, 115).

## Revendications

1. Système téléphonique, comprenant une station de base (100), au moins une partie mobile (200) reliée sans fil techniquement par signal à la station de base (100), ainsi qu'au moins une unité de restitution (310) disposée à un emplacement fixe et reliée techniquement par signal avec la station de base (100), où la station de base (100) présente une unité (700) pour la retransmission d'un signal parlé (615) entrant dans le système téléphonique vers l'unité de restitution (310), **caractérisé en ce que** le système téléphonique présente une unité de capteurs (110) reliée techniquement par signal avec la station de base (100) pour la détermination de la distance acoustique de la partie mobile (200) par rapport à l'unité de restitution (310) fixe et un signal parlé (615) entrant peut être retransmis automatiquement vers une unité de restitution (310) lorsque la partie mobile (200) se trouve à proximité acoustique par rapport à l'unité de restitution (310).

2. Système téléphonique selon la revendication 1, dans lequel celui-ci présente au moins deux unités de restitution (310, 410) disposées à emplacement fixe ainsi qu'au moins deux unités de capteurs (110, 115) et que l'unité (700) de la station de base (100) est installée de telle manière qu'un signal parlé (615) entrant peut être retransmis automatiquement en fonction des informations reçues par le biais des unités de capteurs (110, 115) concernant la distance acoustique de la partie mobile (200) par rapport aux unités de restitution (310, 410), vers l'unité de restitution (310, 410), laquelle présente la distance acoustique la plus courte par rapport à la partie mobile (200).

3. Système téléphonique selon l'une des revendications précédentes, où celui-ci présente une autre partie mobile (500) et la station de base (100) est installée de telle manière qu'un signal parlé (515) émis de l'autre partie mobile (500) peut être retransmis automatiquement au moyen de l'unité (700) vers l'unité de restitution (410), laquelle présente la distance acoustique la plus faible par rapport à la partie mobile (200), et un signal parlé (215) émis par la partie mobile (200) peut être retransmis automatiquement vers l'unité de restitution (310) laquelle présente la distance acoustique la plus faible par rapport à la partie mobile (500).

4. Système téléphonique selon la revendication 3, où, dans le cas où les parties mobiles (200, 500) se situent dans un environnement acoustique commun, la station de base est installée de telle manière qu'une retransmission des signaux parlés (210, 515) des parties mobiles peut être suppressible au niveau d'une unité de restitution (310) se situant dans l'environnement acoustique commun des partie mobiles (200, 500) au moyen de l'unité (700).

5. Système téléphonique selon l'une des revendications précédentes, où les unités de restitution (310, 410) à emplacement fixe sont reliées sans fil à la station de base.

6. Système téléphonique selon l'une des revendications précédentes, où les unités de restitution (310, 410) à emplacement fixe sont reliées à la station de base techniquement par signal par le biais d'un réseau d'alimentation électrique commun.

7. Système téléphonique selon l'une des revendications précédentes, où les unités de capteurs (110, 115) sont des composantes des unités de restitution (310, 410).

8. Procédé de fonctionnement d'un système téléphonique, où le système téléphonique présente une station de base (100), au moins une partie mobile (200) reliée sans fil techniquement par signal à la station de base (100), au moins une unité de restitution (310) disposée à un emplacement fixe et reliée techniquement par signal avec la station de base (100), **caractérisé en ce que** le système téléphonique présente une unité de capteurs (110) reliée techniquement par signal avec la station de base (100) pour la détermination de la distance acoustique de la partie mobile (200) par rapport à l'unité de restitution (310) fixe et un signal parlé (615) entrant peut être retransmis automatiquement par le biais de l'unité de restitution (310) lorsqu'il est reconnu par l'unité de capteurs (110) que la partie mobile (200) se trouve à proximité acoustique par rapport à l'unité de restitution (310).

9. Procédé selon la revendication 8, où, dans le système téléphonique, au moins deux systèmes de restitution (310, 410) à emplacement fixe sont prévus, lesquels ne se situent pas à proximité acoustique l'un de l'autre et un signal parlé (615) entrant dans le système téléphonique est automatiquement retransmis au système de restitution (310, 410) respectif, lequel se trouve à la distance acoustique la plus faible par rapport à la partie mobile (200).

10. Procédé selon la revendication 9, où, dans le système téléphonique, une autre partie mobile (500) est prévue, et un signal parlé (515) émis de l'autre système mobile (500) est retransmis automatiquement vers l'unité de restitution (410) laquelle présente la distance acoustique la plus faible par rapport à la partie mobile (200), et un signal parlé (215) sortant de la partie mobile (200) est retransmis automatiquement vers l'unité de restitution (310) laquelle présente la distance acoustique la plus faible par rapport à la partie mobile (500).

11. Procédé selon la revendication 10, où, dans le cas où les parties mobiles (200, 500) se trouvent dans un environnement acoustique commun, une retransmission des signaux parlés (210, 515) des parties mobiles peut être suppressible au niveau de l'unité de restitution (310) se situant dans l'environnement acoustique commun des parties mobiles (200, 500).

12. Procédé selon l'une des revendications 8 à 11, où, pour la détermination de la distance acoustique entre une partie mobile (200, 500) et une unité de restitution (310, 410), un signal de référence, lequel est perceptible par les unités de capteurs (110, 115), est émis par la partie mobile (200, 500)
